# EUROPÄISCHE PATENTANMELDUNG

(11) **EP 0 789 992 A2**
(43) Veröffentlichungstag der Anmeldung: **20.08.1997**
(21) Anmeldenummer: 97100079.9
(22) Anmeldetag: 04.01.1997
(51) Int. Cl.: A01F 15/02

(54) **Verfahren und Presse zum Bilden quaderförmiger Pressballen aus landwirtschaftlichem Erntegut**

(30) Priorität: 13.02.1996 DE 19605203
(71) Anmelder: SACHT, Hans-Otto, D-48477 Hörstel (DE)
(72) Erfinder: SACHT, Hans-Otto, D-48477 Hörstel (DE)
(74) Vertreter: Busse & Busse Patentanwälte

(57) **Zusammenfassung**

Zur Bildung von quaderförmigen Preßballen aus landwirtschaftlichem Erntegut ist eine Presse vorgesehen, die eine Aufnahmevorrichtung (1) zum Aufnehmen von Erntegut und zum Weiterfördern des aufgenommenen Ernteguts, eine einen quaderförmigen Preßraum (72) umgrenzende Preßkammer (71) und eine unter dieser angeordneten Beschickungsvorrichtung (38) umfaßt, die längs der Unterseite der Preßkammer (71) alternierend gradlinig bewegbar ist und zu beiden Seiten eines Durchtrittsspaltes für das Erntegut mit je einem an den Spalt angrenzenden auf- und abrollbaren Rollbodenteil (44,45) versehen ist, die gemeinsam den Preßraum (72) der Preßkammer (71) unterseitig abschließen. Unterhalb der Beschickungsvorrichtung (38) ist eine sich entlang deren Bewegungsbahn erstreckende Zwischenablage (21) vorgesehen, die mit einem Ende dem Abgabeende der Aufnahmevorrichtung (1) benachbart ist und deren Oberseite eine ebene, zur Bewegungsbahn der Beschickungsvorrichtung (38) parallele Zwischenablagefläche für Erntegut darbietet, die von Fördermitteln (48,49) der Beschickungsvorrichtung (38) überlaufen ist. Auf der Zwischenablagefläche wird zur Vergleichmäßigung der Preßballen das Erntegut schichtförmig aufgebracht und die Erntegutschicht von der Zwischenablage fortlaufend durch die Beschickungsvorrichtung bei deren Bewegung in beiden Richtungen aufgenommen und der Preßkammer zugeführt.

## Beschreibung

Die Erfindung bezieht sich auf ein Verfahren zum Pressen von landwirtschaftlichem Erntegut, insbesondere Halm- und/oder Blattgut, zu quaderförmigen Preßballen gemäß dem Oberbegriff des Anspruchs 1. Die Erfindung bezieht sich ferner auf eine Presse zur Bildung von quaderförmigen Preßballen gemäß dem Oberbegriff des Anspruchs 8.

Bei einem bekannten Verfahren der genannten Art (US-PS 4,270,446) wird das Erntegut von einer Gutaufnahmevorrichtung aufgenommen und von dieser einer Beschickungsvorrichtung zugeführt, die oberhalb der Gutaufnahmevorrichtung und unterhalb einer Preßkammer angebracht ist, wobei die Beschickungsvorrichtung das Erntegut vorverdichtet und von unten her der Preßkammer zuführt, die unterseitig von einem auf- und abrollbaren Rollboden, der einen Durchtrittsspalt offenläßt, abgeschlossen wird. Die Beschickungsvorrichtung umfaßt dabei Zwei mit ihren Drehachsen parallel zueinander im Abstand gelagerte Wickelwalzen, die sich gleichsinnig drehen und zwischen sich das Erntegut vorverdichten und dann der Preßkammer zuführen. Dabei ist die Beschickungsvorrichtung relativ zur Preßkammer alternierend beweglich, um einen aus waagerechten Schichten von Erntegut aufgebauten Ballen zu erzeugen.

Wird die Beschickungsvorrichtung gegenüber einer stationären Preßkammer bewegt, ergeben sich Schwierigkeiten beim Gutübergang von der Aufnahmevorrichtung zu der zu dieser relativbeweglichen Beschickungsvorrichtung und eine ungleichförmige Beschickung der Preßkammer dadurch, daß bei Annäherung der Beschickungsvorrichtung an die Gutaufnahmevorrichtung die Beschickungsvorrichtung dem ihr zugeförderten Erntegut entgegenläuft und bei Umkehrung der Bewegungsrichtung vor dem Erntegut vorherläuft mit der Folge, daß in Abhängigkeit von der Bewegungsrichtung der Beschickungsvorrichtung ungleiche Erntegutmengen pro Zeiteinheit in die Preßkammer gefördert und ungleichförmige Schichten im Preßraum gebildet werden.

Die Erfindung befaßt sich mit dem Problem, ein Preßverfahren und eine Presse der eingangs genannten Art zu schaffen, die gleichmäßigere Preßballen bilden. Die Erfindung löst dieses Problem durch ein Verfahren mit den Merkmalen des Anspruchs 1 und durch eine Presse mit den Merkmalen des Anspruchs 8. Hinsichtlich weiterer Ausgestaltungen der Erfindung wird auf die Ansprüche 2 bis 7 und 9 bis 14 verwiesen.

Durch die Zwischenablage unterhalb der Beschickungsvorrichtung werden die Gutzuführung und die Weiterbeförderung des Gutes in der Beschickungsvorrichtung voneinander entkoppelt, so daß die Beschickungsvorrichtung bei Bewegung in beiden Richtungen Erntegut in einem weitgehend vergleichmäßigten Gutstrom an die Preßkammer übergeben kann.

In besonders vorteilhafter Ausführung bewegt sich das Erntegut auf der Zwischenablage mit einer gegenüber der Fördergeschwindigkeit des Ernteguts in der Beschickungsvorrichtung erhöhten Geschwindigkeit, wodurch die Differenz zwischen den Geschwindigkeitsverhältnissen bei der Vor- und der Rückbewegung der Beschickungsvorrichtung stark verringert ist.

Weitere Vorteile und Einzelheiten der Erfindung ergeben sich aus der nachfolgenden Beschreibung und der Zeichnung, in der mehrere Ausführungsbeispiele des Gegenstandes der Erfindung schematisch veranschaulicht sind. In der Zeichnung zeigen:
- Fig. 1: eine Seitenansicht der Presse nach der Erfindung,
- Fig. 2: eine Ausschnittsvergrößerung zu Fig. 1 zur Veranschaulichung des Erntegutflusses,
- Fig. 3: eine teilweise aufgebrochene Draufsicht zu Fig. 2,
- Fig. 4: eine Ausschnittsvergrößerung zu Fig. 1 zur Veranschaulichung der Antriebe der bewegten Teile,
- Fig. 5: eine Darstellung ähnlich Fig. 2 einer modifizierten Form der Presse,
- Fig. 6: eine schematische Detaildarstellung der Ausgleichsvorrichtung für die Förderwickelwalzen der Beschickungsvorrichtung, und
- Fig. 7: eine Seitenansicht ähnlich Fig. 1 mit rückseitig nachgeordneter Folienbindeeinrichtung.

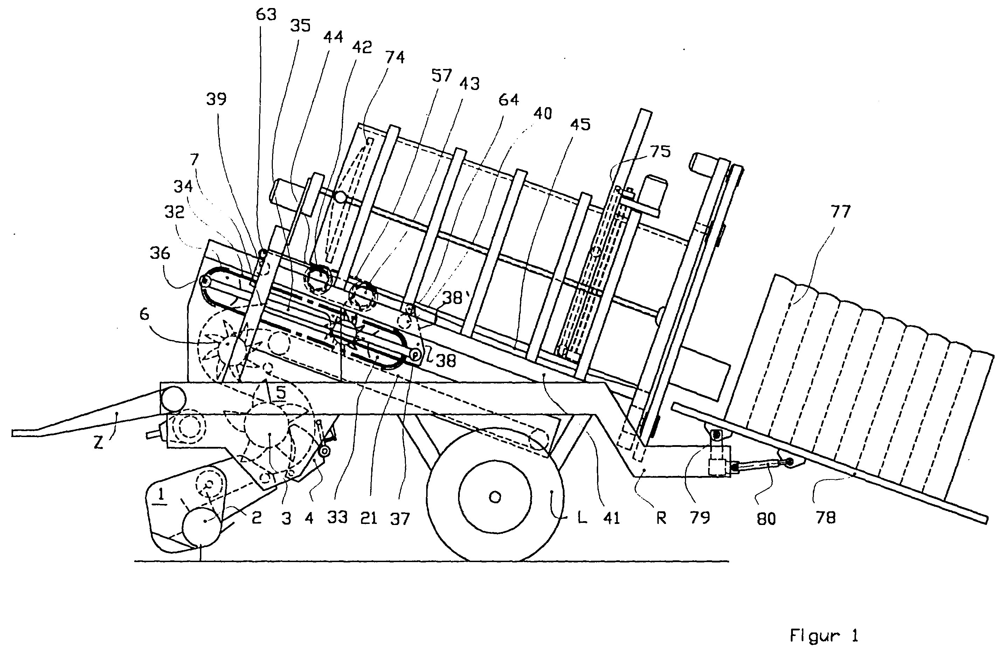

Die in Fig. 1 dargestellte Presse zur Bildung von quaderförmigen Preßballen aus landwirtschaftlichem Erntegut ist wie die weiter unten beschriebenen weiteren Ausführungsformen der Erfindung als Anhängefahrzeug ausgeführt, kann jedoch auch als stationäre Baueinheit oder insbesondere als Selbstfahrer ausgebildet sein.

Im einzelnen umfaßt die Presse einen sich über Laufräder L auf dem Boden abstützenden Rahmen R mit Zugdeichsel Z, der eine an sich bekannte Aufnahmevorrichtung 1 abstützt, mittels der Erntegut vom Boden aufgenommen werden kann. Die Aufnahmevorrichtung 1 gemäß Fig. 1 umfaßt eine Pick-up-Trommel 2, die das vorzugsweise in Schwaden auf dem Boden liegende Erntegut aufnimmt und einer ersten Förderwalze 3 zuführt, die zum Schneiden des Erntegutes mit ein- und ausklappbaren Schneidmessern 4 versehen sein kann und das Erntegut in einem Förderkanal 5 zu einer zweiten Förderwalze 6 befördert, die das Erntegut über Kopf auf eine Zwischenablage 21, die hier als Förderband ausgebildet ist, aufbringt. Zweckmäßigerweise ist dabei zwischen der zweiten Förderwalze 3 der Aufnahmevorrichtung 1 und dem vorderen Ende des die Zwischenablage bildenden Förderbandes 21 ein Abstreifer 7 angebracht.

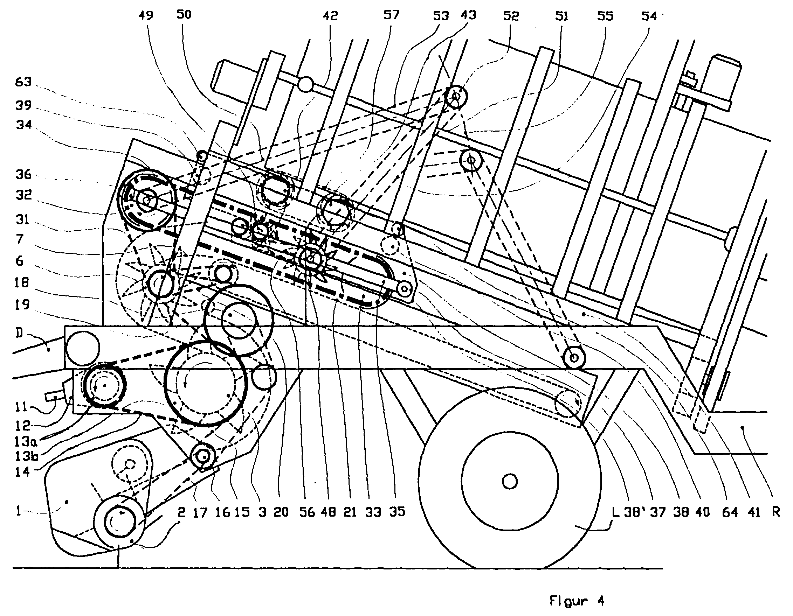

Der Antrieb der Teile der Aufnahmevorrichtung 1 und des Förderbandes 21 erfolgt, wie das in der Fig. 4 veranschaulicht ist, von einer Eingangswelle 11, eines Zentralgetriebes 12 her, das ein erstes Kettenrad 13a antreibt, das mittels einer Antriebskette 14 ein der ersten Förderwalze 3 zugeordnetes Kettenrad 13b antreibt. Ein mit diesem zweiten Kettenrad 13b verbundenes, koaxiales, nicht dargestelltes weiteres Kettenrad treibt über einen Kettentrieb 15, Kettenräder 16 und 18 an, von denen das Kettenrad 16 Teil eines Kettentriebs 17 ist, der die Pick-up-Trommel 2 antreibt. Das Kettenrad 18 ist Teil eines Kettentriebs 19, der die zweite Förderwalze 6 mit einer im Vergleich zur zweiten und dritten Förderwalze 3,6 und zur Pick-up-Trommel 2 erhöhten Drehzahl antreibt. Von der zweiten Förderwalze 6 ausgehend wird über einen Kettentrieb 20 das die Zwischenablage bildende Förderband 21 mit einer an die zweite Förderwalze 6 angepaßten Geschwindigkeit angetrieben.

Die gezeigte, unter dem vorderen Pressenende angeordnete Aufnahmevorrichtung 1 beschickt die Zwischenablage 21 von der Frontseite der Presse her. Es ist jedoch auch denkbar, die Zwischenablage von der Rückseite der Presse her mit Erntegut zu beschicken, wenn die Aufnahmevorrichtung 1 unter dem rückwärtigen Pressenende angeordnet wird.

Von der zweiten Förderwalze 6 her wird über einen Kettentrieb 31 ein Kettentrieb 32,33,34 angetrieben, dessen Kette 34 eine Schubstange 35 antreibt, deren eines Ende 36 mit der Kette 34 verbunden ist und mit dieser umläuft und deren anderes Ende 37 an einer Beschickungsvorrichtung 38 angreift und diese in eine alternierende Bewegung entlang der Längsmittelebene der Presse versetzt. Die Beschickungsvorrichtung 38 weist einen Schlitten 38' auf, der über vordere und rückwärtige Laufrollen 39 und 40 in am Fahrzeugrahmen angebrachten Führungsschienen 41 geführt ist, die sich auf beiden Seiten der Presse parallel zum Arbeitstrum des die Zwischenablage bildenden Förderbandes 21 erstrecken, und dazu dient, die Aggregate der Beschickungsvorrichtung abzustützen.

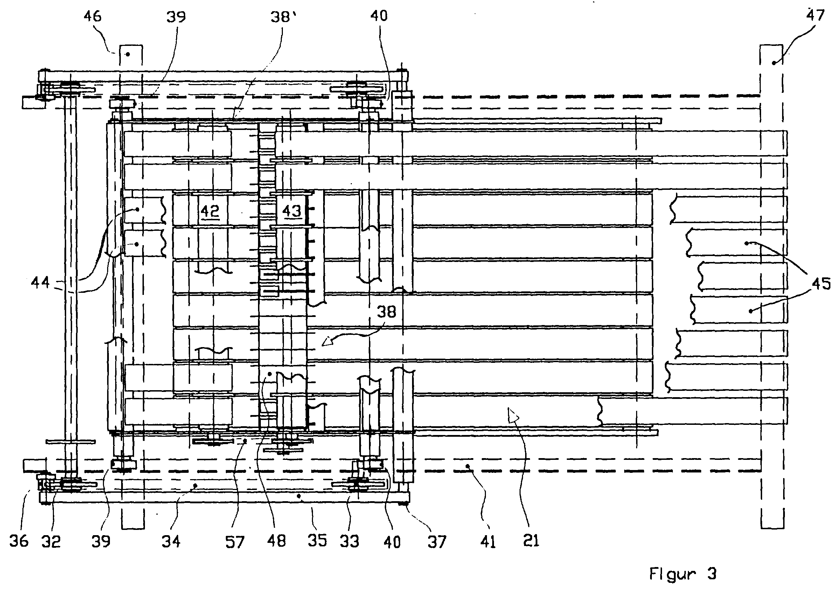

Die Beschickungsvorrichtung 38 umfaßt zwei zwischen sich einen Durchtrittsspalt begrenzende Förderwickelwalzen 42 und 43, die eine Förder- und zugleich eine Wickelfunktion zur Auf- und Abwicklung von Riemen 44 und 45 erfüllen, die anderenends an Querträgern 46 und 47 der Presse festgelegt sind und als Rollbodenteile eine Preßkammer 71 bis auf den Durchtrittsspalt unterseitig abschließen. Die Riemen 44,45 sind, wie dies Fig. 3 veranschaulicht, im Abstand zueinander angeordnet und bestehen aus dünnem, hochfestem, in Längsrichtung hoch dehnungsarmem Material.

Die Förderwickelwalzen 42,43 haben am Umfang Förderglieder 42',43' zwischen denen sich die Umfangsbereiche befinden, auf denen die Riemen 44,45 auf- und abgewickelt werden. Die Förderwickelwalzen laufen gleichsinnig derart um, daß sich der Umfang einer Förderwickelwalze im Durchtrittsspalt aufwärts bewegt und der Umfang der anderen Förderwickelwalze im Durchtrittsspalt abwärts bewegt. Dabei wechselt die Drehrichtung der Förderwickelwalzen 42,43 mit dem Richtungswechsel der Beschickungsvorrichtung 38. Der Drehantrieb erfolgt jeweils durch den Riemen 44 oder 45, der bei Bewegung der Beschickungsvorrichtung abgewickelt wird und dabei seine Förderwickelwalze in entsprechende Umdrehung versetzt. Über einen Kettentrieb 57 sind die Drehbewegungen beider Förderwickelwalzen 42,43 gleichgeschaltet.

Da jeweils nur eine Förderwickelwalze 42 oder 43 im Durchtrittsspalt in Förderrichtung für das Erntegut umläuft, sind die Förderglieder 42',43' so ausgebildet, daß sie nur in Förderrichtung eine Förderwirkung entfalten, bei Umlauf entgegen der Förderrichtung des Ernteguts hingegen keine Wirkung auf dieses ausüben.

Beim Drehen der Förderwickelwalzen ergibt sich das Problem, daß, ausgehend von der Mittellage der Beschickungsvorrichtung 38, bei der auf beide Förderwickelwalzen 42 und 43 jeweils gleichviele Riemenwindungen aufgewickelt sind, auf die in Bewegungsrichtung der Beschickungsvorrichtung 38 jeweils vordere Förderwickelwalze 42 bzw. 43 eine größere Riemenlänge aufgewickelt wird, als von der hinteren Förderwickelwalze abgewickelt wird. Dies resultiert daraus, daß sich während des Aufwickelns eines Riemens 44 bzw. 45 der Wickeldurchmesser vergrößert, so daß die bei einer vollen Walzenumdrehung aufgewickelte Riemenlänge größer ist als die vom Umfang der anderen Förderwickelwalze abgewickelte Riemenlänge. Dadurch kommt es zu ungleichen Riemenspannungen.

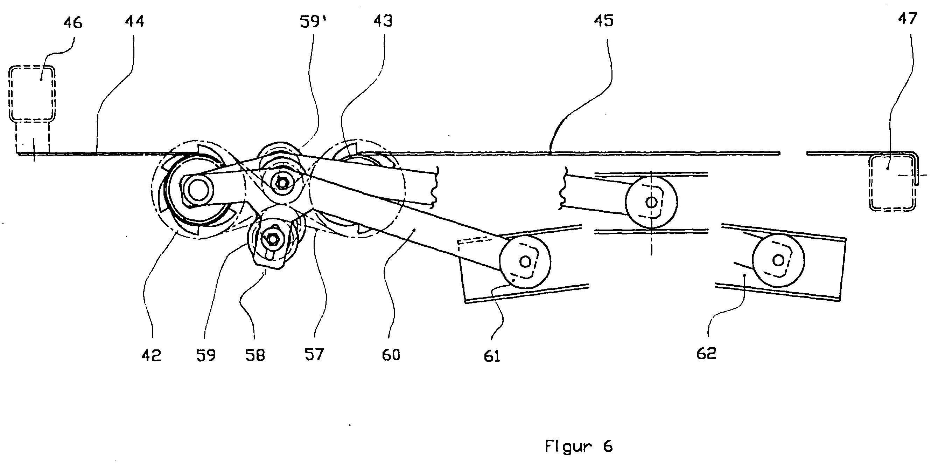

Zur Vermeidung ungleicher Riemenspannungen ist dem Kettentrieb 57 eine Ausgleichsvorrichtung 58 zugeordnet, die in der Fig. 6 schematisch dargestellt ist und deren Aufgabe es ist, in Abhängigkeit von der Momentanposition der Beschickungsvorrichtung 38 auf ihrem Weg entlang der Preßkammerunterseite den Förderwalzen 42 bzw. 43 eine Änderung der durch die Riemenauf- bzw. -abwicklung bewirkten Momentanwinkelstellung zueinander vorzugeben, so daß die Spannungen in den Riemen 44 bzw. 45 einander angeglichen werden.

Dazu dient ein an den gegenüberliegenden freien Kettenbereichen des die Förderwickelwalzen 42 und 43 kuppelnden Kettentriebes 57 über zwei Kettenführungsrädern 59 und 59' angreifender Stellhebel 60, der koaxial zur Drehachse der Förderwalze 42 schwenkbar gelagert ist und anderenends ein Tastrad 61 aufweist, das in einer Führung 62 geführt wird und dort eine Kurvenbahn abtastet, die dem Weg der Beschickungsvorrichtung 38 zugeordnet ist, wobei der obere Totpunkt der Kurve in der Mittelstellung der Beschickungsvorrichtung 38 auf ihrem Wege entspricht, während untere Endstellungen der Kurvenbahn erreicht werden, wenn die Beschickungsvorrichtung 38 ihre Endstellungen erreicht. Im oberen Totpunkt, also in der Mittelstellung der Beschickungsvorrichtung 38, lenkt das untere Kettenführungsrad 59 den unteren freien Bereich des Kettentriebs 57 verhältnismäßig stark aus und gibt beiden Förderwickelwalzen 42 und 43 ihre Grundwinkelausrichtung vor. Wird nun die Beschickungsvorrichtung 38 aus der Mittellage heraus in Richtung einer Endstellung verfahren, so bewegt sich der Schwenkarm 60 mit seinem Tastorgan 61 in der Führung 62 nach unten, so daß das Kettenführungsrad 59' den oberen freien Bereich des Kettentriebs 57 zunehmend nach unten auslenkt, während das untere Kettenführungsrad 59, das zu Kettenspannungszwecken einstellbar sein kann, die Auslenkung des unteren freien Kettenbereichs des Kettentriebs 57 entsprechend zurückführt. Dadurch werden die Förderwickelwalzen 42 und 43 gegenläufig einwärts verdreht und dadurch die sonst auftretenden Spannungsunterschiede in den Riemen 44,45, die im übrigen unterseitig durch zwei an der Beschickungsvorrichtung 38 angebrachte obere Auflagenrollen 63 und 64 unterstützt werden, ausgeglichen.

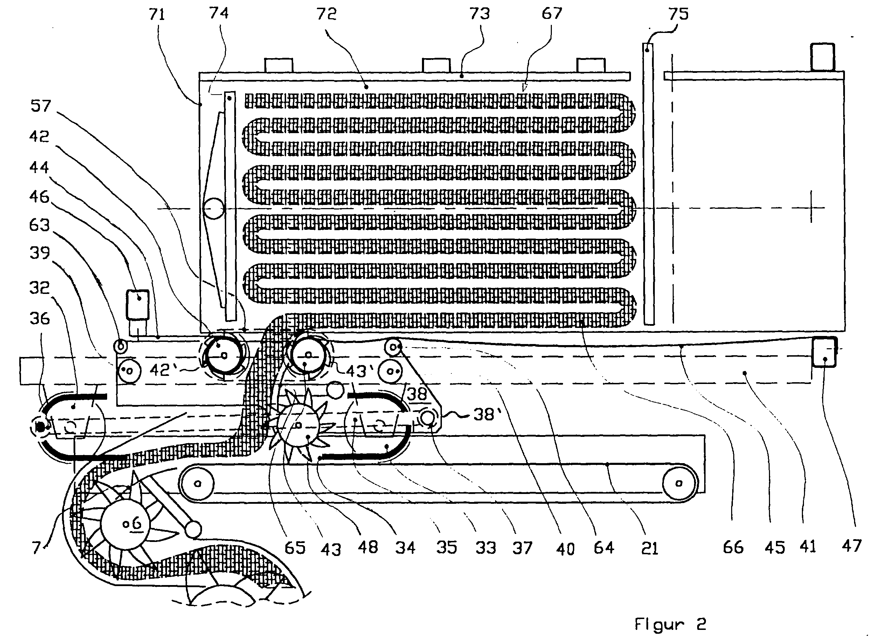

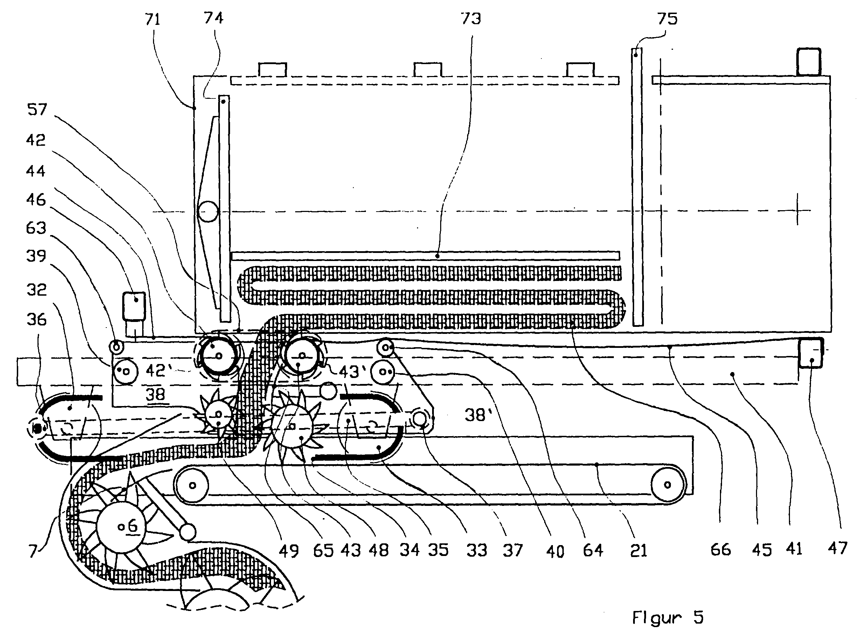

Die Beschickungsvorrichtung 38 umfaßt eine die Zwischenablage 21 überlaufende und dabei auf dieser liegendes Erntegut aufnehmende Zusatzförderwalze 48, die sich unterhalb der der Aufnahmevorrichtung 1 abgewandten, dem Durchtrittsspalt der Beschickungsvorrichtung 38 nachgeordneten Förderwickelwalze 43 befindet, wie das in Fig. 2 veranschaulicht ist. Die Beschickungsvorrichtung 38 kann auch noch eine zweite Zusatzförderwalze 49 aufweisen, die unter der der Aufnahmevorrichtung 1 zugewandten vorderen Förderwickelwalze 42 angeordnet ist und von der Oberseite der Zwischenablage 21 einen größeren Abstand einhält als die hintere Zusatzförderwalze 48, so daß die vordere Zusatzförderwalze 49 von dem Erntegut unterlaufen werden kann (Fig 5).

Der Antrieb der Zusatzförderwalze 48 erfolgt, wie das in der Fig. 4 veranschaulicht ist, vom Kettenrad 32 her über Kettentriebe 53,54, von denen der Kettentrieb 53 einem Lenker 50 und der Kettentrieb 54 einem Lenker 51 zugeordnet ist, die in einem freischwebenden Gelenk 52 verbunden sind. Die Drehbewegung von Kettenrad 32 und Zusatzförderwalze 48 sind somit gleichsinnig. Das Gelenk 52 bewegt sich bei Bewegungen der Beschickungsvorrichtung 38 auf einer Kreisbahn 55, deren Zentrum mit der Drehachse des Kettenrades 32 zusammenfällt. Durch diese Konstruktion ist sichergestellt, daß die Zusatzförderwalze 48 mit immer gleicher Geschwindigkeit und in gleicher Richtung rotiert, während sie der alternierenden Bewegung der Beschickungsvorrichtung 38 folgt.

Wenn wie in der Fig. 5 dargestellt die Beschickungsvorrichtung 38 mit einer weiteren Zusatzförderwalze 49 versehen ist, so daß der Durchtrittsspalt im Eintrittsbereich durch die beiden Zusatzförderwalzen 48,49 begrenzt wird, dann wird diese Zusatzförderwalze 49 von der Zusatzförderwalze 48 her durch einen Kettentrieb 56 zu einer synchronen, gegenläufigen Drehbewegung angetrieben.

Im Betrieb der Presse wird von der Pick-up-Walze 2 Erntegut wie Heu und Stroh vom Boden aufgenommen, von der ersten Förderwalze 3 übernommen und von dieser der zweiten Förderwalze 6 zugefördert, die das Erntegut über Kopf mit erhöhter, beispielsweise das Drei- bis Fünffache der vorhergehenden Fördergeschwindigkeit betragenden, Fördergeschwindigkeit an das die Zwischenablage bildende Förderband 21 abgibt, das bevorzugt mit der gleichen Fördergeschwindigkeit wie die Förderwalze 6 arbeitet. Wenngleich die Ausbildung der Zwischenablage als Förderband bevorzugt ist, so kann sie doch auch von einer ebenen glatten Platte gebildet werden, auf die das Erntegut von der Förderwalze 6 mit erhöhter Geschwindigkeit aufgeworfen wird und auf der sich das Erntegut bis hin zur Beschickungsvorrichtung 38 verteilt.

Vom Förderband 21 wird das Erntegut von der Zusatzförderwalze 48 bzw. von beiden Zusatzförderwalzen 48 und 49 aufgenommen und den beiden Förderwickelwalzen 42 und 43 zugeführt, wobei ein zwischen der Aufnahmewalze 48 und der Förderwickelwalze 43 angebrachter Abstreifer 65 eine Führung des Erntegutes gewährleistet. Von den Förderwickelwalzen 42 und 43 ist jeweils nur die in Bewegungsrichtung der Beschickungsvorrichtung 38 rückwärtige Förderwickelwalze fördernd tätig. Die vordere Förderwickelwalze trägt zur Vorverdichtung des Erntegutes bei, das bei Durchlaufen der Beschickungsvorrichtung 38 zu einem Strang geformt wird, der im Preßraum 72 die jeweils unterste Schicht 66 bildet. Die Fördergeschwindigkeit des Ernteguts in der Beschickungsvorrichtung entspricht wieder der Fördergeschwindigkeit in der Aufnahmevorrichtung 1 im Bereich der ersten Förderwalze 3 und kann beispielsweise 1 bis 3 m/sec betragen.

Der Strang wird auf den Riemenboden der Preßkammer 71 abgelegt, wobei sich entsprechend der alternierenden Bewegung der Beschickungsvorrichtung 38 mäanderförmige Lagen bilden, die sich zu einem den Preßraum 72 der Preßkammer 71 einnehmenden Ballen 67 aufbauen. Die Hauptpressung des Ballens 67 beginnt, wenn der Preßraum 72 der Preßkammer 71 gefüllt ist, so daß Erntegut gegen den Druck der oberseitigen Begrenzung des Preßraums 72 in den Preßraum 72 eingefördert werden muß und der sich aufbauende Ballen 67 zwischen den Riemen 44 bzw. 45 und dem Preßdeckel 73 unter zunehmenden Druck gelangt.

Der Preßraum 72 ist seitlich von feststehenden Wänden, vorderseitig von einem Ausschubkolben 75 sowie rückseitig von einer Begrenzungswand 75 begrenzt. Vorteilhafter ist der Preßdeckel 73, wie das in der Fig. 5 dargestellt ist, auf- und abbeweglich, so daß eine Vorpressung schon dann beginnt, wenn erstes Erntegut in den Preßraum 72 gelangt.

Der Preßdeckel 73 ist in einer oberen Endstellung oberhalb der Bewegungsbahn des Ausschubkolbens 74 arretierbar und kann bei seiner auf den Ausschub eines fertigen Ballens 67 folgenden Abwärtsbewegung durch geeignete Mittel abgebremst oder erst freigegeben werden, wenn bereits eingefördertes Erntegut den Aufprall dämpfen kann.

Nach Fertigstellung des Ballens 67, die durch einen in der Preßkammer 71 angebrachten Druckfühler angezeigt werden kann, wird die rückwärtige Begrenzungswand 75 geöffnet, beispielsweise hochgefahren oder aufgeklappt, und der Preßballen 67 durch den Ausschubkolben 74 parallel zum Boden der Preßkammer rückwärts verschoben. Dabei gelangt der Ballen 67 zu einer der Begrenzungswand 75 nachgeordneten Bindevorrichtung 76, die den den Ballen 67 quer zu seiner Ausschubrichtung und quer zu seiner Schichtung mit Bindemittel 77, zum Beispiel Bindegarn oder -band, umschnürt. Dazu wird der Ballen 67 jeweils schrittweise ausgeschoben und während der Stops von der Bindevorrichtung 76 mit Bindemittel 77 ein- oder mehrfach umwickelt, wobei auf ein Verknoten verzichtet werden kann. Die Bindevorrichtung 76 umfaßt beispielsweise einen den Preßballen 67 auf einer Kreisbahn umkreisenden Bindemittelspender, wie das näher in der WO94/23558 dargestellt und beschrieben ist, auf die erläuterungshalber hingewiesen wird.

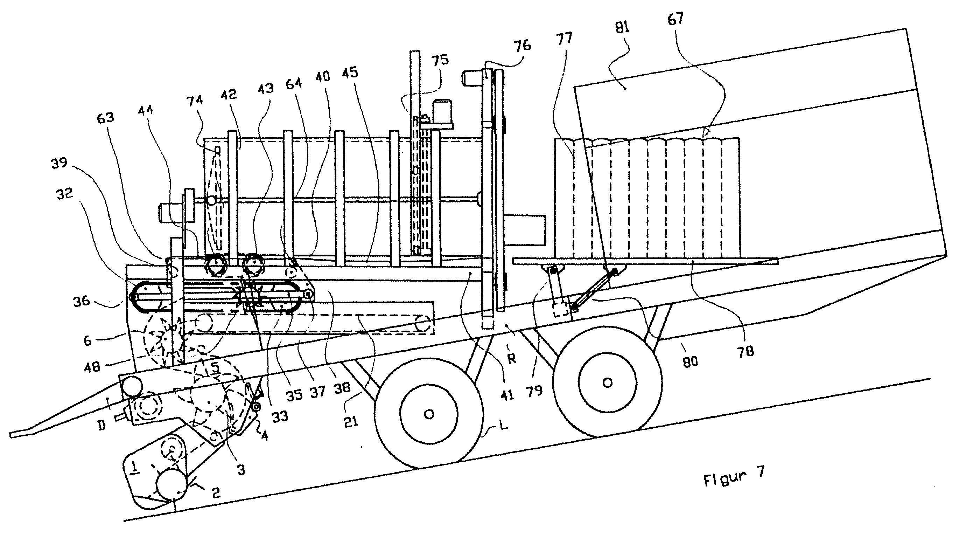

Der Preßballen 67 gelangt hinter der Bindevorrichtung 77 auf eine nachgeordnete Ablauframpe 78, die um eine horizontale Achse 79 schwenkbar und durch einen Kraftheber 80 zwischen einer senkrechten Transportstellung und einer schräg abfallenden Betriebsstellung bewegbar ist. Wie in der Fig. 7 veranschaulicht kann der Bindevorrichtung 76 eine den Ballen 67 mit Folie umgebende Hüllvorrichtung 81 nachgeordnet sein.

Die beschriebene Presse erzeugt einen gleichmäßig hochverdichteten, quaderförmigen Preßballen, der exakt stapelbar und leicht transportierbar ist. Die Presse kann beispielsweise Ballen mit einer Länge von etwa 1 bis 2,5 m sowie einer Breite und Höhe von etwa 1 m und mehr erzeugen. Anstelle solcher Großballen können Preßverfahren und Presse jedoch auch für kleinere Ballen angewandt werden.

Bei den dargestellten Ausführungsbeispielen dienen als Antriebe Kettentriebe, die ein festes Geschwindigkeitsverhältnis für die angetriebenen Teile 2,3,6,21,38,42,43,48,49 vorgeben. Alle diese Teile können jedoch auch durch Antriebe, z.B. Hydraulikmotoren, angetrieben werden, die es ermöglichen, die Förder- bzw. Bewegungsgeschwindigkeiten stufenlos oder in Stufen zu verändern.

## Patentansprüche

1. Verfahren zum Pressen von landwirtschaftlichem Erntegut, insbesondere Halm- und/oder Blattgut, zu quaderförmigen Preßballen, bei dem Erntegut von einer Gutaufnahmevorrichtung einer entlang der Unterseite der Preßkammer alternierend bewegbaren Beschickungsvorrichtung zugeführt, von dieser unter Vorverdichtung in die bis auf einen Spalt unterseitig verschlossene Preßkammer eingeführt, in dieser zu einem den Preßraum der Preßkammer einnehmenden Preßballen aus gefalteten Erntegutschichten aufgebaut und der fertige Preßballen mit Bindemittel gebunden wird, **dadurch gekennzeichnet** 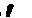 daß das Erntegut von der Aufnahmevorrichtung auf einer sich längs der Bewegungsbahn der Beschickungsvorrichtung unter dieser erstreckenden Zwischenablagefläche schichtförmig aufgebracht und die Erntegutschicht von der Zwischenablage fortlaufend durch die Beschickungsvorrichtung bei deren Bewegung in beiden Richtungen aufgenommen und der Preßkammer zugeführt wird.

2. Verfahren nach Anspruch 1, **dadurch gekennzeichnet** 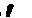 daß das Erntegut von der Aufnahmevorrichtung an einem Ende der Zwischenablage parallel zur Bewegungsrichtung der Beschickungsvorrichtung mit erhöhter Fördergeschwindigkeit auf die Zwischenablagefläche aufgebracht wird.

3. Verfahren nach Anspruch 2, **dadurch gekennzeichnet** 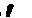 daß das Erntegut von der Aufnahmevorrichtung auf den zwischen dem Aufgabeende der Zwischenablagefläche und der Beschickungsvorrichtung befindlichen freien Bereich der Zwischenablagefläche aufgeworfen wird.

4. Verfahren nach Anspruch 1 oder 2, **dadurch gekennzeichnet** 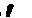 daß das auf die Zwischenablagefläche übergegangene Erntegut auf dieser längs der Bewegungsrichtung der Beschickungsvorrichtung zu dieser hingefördert wird.

5. Verfahren nach Anspruch 4, **dadurch gekennzeichnet** 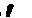 daß die Fördergeschwindigkeit des Ernteguts auf der Zwischenablagefläche einem mehrfachen der Grundfördergeschwindigkeit des Erntegutes in der Gutaufnahmevorrichtung und/oder in der Beschickungsvorrichtung entspricht.

6. Verfahren nach einem der Ansprüche 1 bis 5, **dadurch gekennzeichnet** 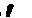 daß der Preßballen nach seiner Fertigstellung fortschreitend in seiner Längsrichtung aus der Preßkammer ausgeschoben und dabei in einer der Austrittsebene der Preßkammer nachgeordneten Ebene quer zur Ausschubrichtung mit Bindemittel umwickelt wird.

7. Verfahren nach Anspruch 6, **dadurch gekennzeichnet** 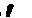 daß der Preßballen in mehreren, im Abstand zueinander und zu den Preßballenende gelegenen Querebenen mit einer Bindegarn-Mehrfachumwicklung versehen wird.

8. Presse zur Bildung von quaderförmigen Preßballen aus landwirtschaftlichem Erntegut, insbesondere Halm- und/oder Blattgut mit einer Aufnahmevorrichtung (1) zum Aufnehmen von Erntegut, insbesondere vom Boden beim Verfahren der Presse über eine landwirtschaftliche Erntegut-Anbaufläche, und zum Weiterfördern des aufgenommenen Ernteguts, mit einer einen quaderförmigen Preßraum (72) umgrenzenden Preßkammer (71) und mit einer unter dieser angeordneten Beschickungsvorrichtung (38), die längs der Unterseite der Preßkammer (71) alternierend gradlinig bewegbar ist und zu beiden Seiten eines Durchtrittsspaltes für das Erntegut mit je einem an den Spalt angrenzenden, auf- und abrollbaren Rollbodenteil (44,45) versehen ist, die gemeinsam den Preßraum (72) der Preßkammer (71) unterseitig abschließen, **dadurch gekennzeichnet** 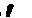 daß unterhalb der Beschickungsvorrichtung (38) eine sich entlang deren Bewegungsbahn erstreckende Zwischenablage (21) vorgesehen ist, die mit einem Ende dem Abgabeende der Aufnahmevorrichtung (1) benachbart ist und deren Oberseite eine ebene, zur Bewegungsbahn der Beschickungsvorrichtung (38) parallele Zwischenablagefläche für Erntegut darbietet, die von Fördermitteln (48,49) der Beschickungsvorrichtung (38) überlaufen ist.

9. Presse nach Anspruch 8, **dadurch gekennzeichnet** 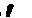 daß die Aufnahmevorrichtung (1) eine einer Pick-up-Walze (2) nachgeordnete erste Förderwalze (3) gegebenenfalls mit Schneidwerk (4) und eine dieser nachgeordnete zweite Förderwalze (6) für Erntegut aufweist, von denen zumindest die zweite Förderwalze (6) das Erntegut über Kopf der Zwischenablage (21) zufördert.

10. Presse nach Anspruch 9, **dadurch gekennzeichnet** 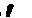 daß die zweite Förderwalze (6) der Aufnahmevorrichtung (1) mit höherer Umlaufgeschwindigkeit als die erste Förderwalze (3) der Aufnahmevorrichtung (1) antreibbar ist.

11. Presse nach Anspruch 9 oder 10, **dadurch gekennzeichnet** 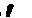 daß die Umlaufgeschwindigkeit der zweiten Förderwalze (6) der Aufnahmevorrichtung (1) stufenlos oder in Stufen veränderbar ist.

12. Presse nach einem der Ansprüche 8 bis 11, **dadurch gekennzeichnet** 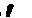 daß die Zwischenablage von einer feststehenden Platte gebildet ist.

13. Presse nach einem der Ansprüche 8 bis 11, **dadurch gekennzeichnet** 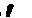 daß die Zwischenablage von einem Förderer (21) gebildet ist.

14. Presse nach Anspruch 13, **dadurch gekennzeichnet** 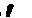 daß als Förderer ein mit seinem Arbeitstrum parallel zur Bewegungsrichtung der Beschickungsvorrichtung (38) verlaufendes, gleichsinnig zur Umlaufrichtung der zweiten Förderwalze (6) der Aufnahmevorrichtung (1) umlaufendes Förderband (21) vorgesehen ist.

15. Presse nach Anspruch 13 oder 14, **dadurch gekennzeichnet** 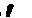 daß das Förderband (21) mit einer stufenlos oder in Stufen einstellbaren Fördergeschwindigkeit antreibbar ist.

16. Presse nach einem der Ansprüche 8 bis 15, **dadurch gekennzeichnet** 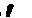 daß die Rollbodenteile von parallel im Abstand nebeneinander angeordneten Riemen (44,45) gebildet sind, die an einem Ende festgelegt und am anderen Ende auf je eine Wickeltrommel auf- und von dieser abrollbar sind.

17. Presse nach Anspruch 16, **dadurch gekennzeichnet** 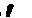 daß die Wickeltrommeln für beide Bodenteile (44,45) einen mitbeweglichen Bestandteil der Beschickungsvorrichtung (38) bilden und die den Wickeltrommeln jeweils abgewandten Enden der Riemen (44,45) an den quer zur Bewegungsrichtung der Beschickungsvorrichtung (38) ausgerichteten Enden der Preßkammer (71) festgelegt sind.

18. Presse nach Anspruch 16 oder 17, **dadurch gekennzeichnet** 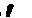 daß die Riemen (44,45) beider Bodenteile in Bereichen zwischen Fördergliedern (42',43') auf dem Umfang von zugleich die Wickeltrommel bildenden Förderwickelwalzen (42,43) der Beschickungsvorrichtung (38) aufwickelbar sind.

19. Presse nach einem der Ansprüche 8 bis 18, **dadurch gekennzeichnet,** daß die beiden Förderwickelwalzen (42,43) der Beschickungsvorrichtung (38) durch einen Kettentrieb (57) zur Synchronisierung ihrer Drehbewegung gekuppelt sind.

20. Presse nach Anspruch 19, **dadurch gekennzeichnet,** daß der Kette des Kettentriebs (57) eine Ausgleichsvorrichtung zugeordnet ist, die in Abhängigkeit von der Momentanposition der Beschickungsvorrichtung (38) auf deren Weg entlang der Preßkammerunterseite den Förderwickelwalzen (42,43) der Beschickungsvorrichtung (38) eine die wegabhängigen Wickeldurchmesserveränderungen berücksichtigende Änderung ihrer Winkelstellung zueinander vorgibt.

21. Presse nach Anspruch 20, **dadurch gekennzeichnet,** daß die Ausgleichsvorrichtung zwei außenseitig an den gegenüberliegenden freien Kettenbereichen des Kettentriebs (57) angreifende Kettenführungsräder (59,59') aufweist, die an einem um die Drehachse einer Förderwickelwalze (42) der Beschickungsvorrichtung (38) schwenkbaren Stellhebel (60) frei drehbar gelagert und mittels des Stellhebels (60) gemeinsam auf und ab verlagerbar sind, und daß der Stellhebel (60) an seinem freien Ende mit einem Tastorgan (61) versehen ist, das eine sich entlang dem Weg der Beschickungsvorrichtung (38) erstreckende Kurvenbahn abtastet.

22. Presse nach einem der Ansprüche 8 bis 21, **dadurch gekennzeichnet,** daß die Beschickungsvorrichtung (38) eine Zusatzförderwalze (48) aufweist, die unter der dem Beaufschlagungsende der Zwischenablage (21) abgewandten Förderwickelwalze (43) angeordnet ist.

23. Presse nach einem der Ansprüche 8 bis 21, **dadurch gekennzeichnet,** daß die Beschickungsvorrichtung (38) zwei jeweils unter den Förderwickelwalzen (42,43) angeordnete Zusatzförderwalzen (48,49) aufweist, von denen die dem Beaufschlagungsende der Zwischenablage (21) zugewandte Zusatzförderwalze (49) in größerem Abstand zur Oberseite der Zwischenablage (21) angeordnet ist als die andere Zusatzförderwalze (48).

24. Presse nach einem der Ansprüche 8 bis 23, **dadurch gekennzeichnet** 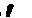 daß die Beschickungsvorrichtung (38) einen auf Rollen (39,40) entlang von Führungen (41) unterhalb der Preßkammer (71) alternierend verfahrbaren Schlitten (38') umfaßt.

25. Presse nach einem der Ansprüche 8 bis 24, **dadurch gekennzeichnet** 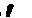 daß die Beschickungsvorrichtung (38) mit einer stufenlos oder in Stufen einstellbaren Verfahrgeschwindigkeit antreibbar ist.

26. Presse nach einem der Ansprüche 8 bis 25, **dadurch gekennzeichnet** 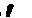 daß die Fördermittel (42,43,48,49) der Beschickungsvorrichtung (38) mit einer stufenlos oder in Stufen einstellbaren Fördergeschwindigkeit antreibbar sind.

27. Presse nach einem der Ansprüche 8 bis 26, **dadurch gekennzeichnet** 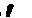 daß die Fördergeschwindigkeit des die Zwischenablage bildenden Förderbandes (21) größer ist als der Betrag der Verfahrgeschwindigkeit der Beschickungsvorrichtung (38) längs der Zwischenablage (21).

28. Presse nach einem der Ansprüche 8 bis 27, **dadurch gekennzeichnet** 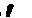 daß die Bewegungsrichtung der Beschickungsvorrichtung (38) parallel zur vertikalen Längsmittelebene der Preßkammer (71) ausgerichtet ist.

29. Presse nach einem der Ansprüche 8 bis 28, **dadurch gekennzeichnet** 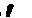 daß die horizontale Längsmittelebene der Preßkammer (71) zur Seite der Aufnahmevorrichtung (1) hin schräg ansteigt.

30. Presse nach einem der Ansprüche 8 bis 29, **dadurch gekennzeichnet** 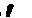 daß die Preßkammer (71) an ihrem der Aufnahmevorrichtung (1) abgewandten Ende von einer Begrenzungswand (75) begrenzt ist, die mittels eines Antriebs aus ihrer Schließstellung in eine das Ausschieben eines fertigen Preßballens (67) erlaubende Offenstellung verlagerbar ist.

31. Presse nach einem der Ansprüche 8 bis 30, **dadurch gekennzeichnet** 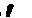 daß in der Preßkammer (71) ein Ausschubkolben (74) angeordnet ist, der sich in Ausgangsstellung an dem der verlagerbaren Begrenzungswand (75) gegenüberliegenden Ende der Preßkammer (71) im Preßraum (72) befindet und mittels eines Antriebs zur verlagerbaren Begrenzungswand (75) hin parallelverschiebbar ist.

32. Presse nach einem der Ansprüche 8 bis 31, **dadurch gekennzeichnet** 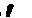 daß im Abstand hinter der verlagerbaren Begrenzungswand (75) der Preßkammer (71) eine Bindevorrichtung (77) angeordnet ist, die einen in ihre Bewegungsebene vorgeschobenen Preßballen (67) umkreisenden, den Preßballen (67) mit Bindemittel umschnürenden Bindemittelspender umfaßt.

33. Presse nach Anspruch 32, **dadurch gekennzeichnet** 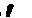 daß der Bindevorrichtung eine Ablauframpe (78) nachgeordnet ist, die um eine horizontale Querachse (79) aus einer aufrechten Transportstellung in eine in Ausschubrichtung des Preßballens (67) schräg abfallende Betriebsstellung verlagerbar ist.

34. Presse nach einem der Ansprüche 8 bis 33, **dadurch gekennzeichnet,** daß in der Preßkammer (71) ein den Preßraum (72) oberseitig begrenzender, auf- und abbeweglicher Preßdeckel (73) vorgesehen ist.

35. Presse nach Anspruch 34, **dadurch gekennzeichnet,** daß der Preßdeckel (73) in einer oberen Endstellung oberhalb der Bewegungsbahn des Ausschubkolbens (74) arretierbar ist.
